# EUROPÄISCHE PATENTSCHRIFT

(11) **EP 2 456 560 B1**
(45) Veröffentlichungstag und Bekanntmachung des Hinweises auf die Patenterteilung: **17.07.2013**
(21) Anmeldenummer: 10765573.0
(22) Anmeldetag: 23.09.2010
(51) Int. Cl.: B03B 5/56, B03B 9/06, B07B 4/08

(54) **VERFAHREN UND VORRICHTUNG ZUM AUFBEREITEN VON GLASBRUCH**
METHOD AND DEVICE FOR PREPARING BROKEN GLASS
PROCÉDÉ ET DISPOSITIF DE TRAITEMENT DE ROGNURES DE VERRE

(30) Priorität: 27.10.2009 DE 102009050819
(43) Veröffentlichungstag der Anmeldung: 30.05.2012
(73) Patentinhaber: ALLGAIER WERKE GmbH, 73066 Uhingen (DE)
(72) Erfinder: TROJOSKY, Mathias, 73230 Kirchheim/Teck (DE); HESSE, Jens, 73072 Donzdorf (DE)
(74) Vertreter: Dr. Weitzel & Partner
(86) Internationale Anmeldenummer: PCT/EP2010/005823
(87) Internationale Veröffentlichungsnummer: WO 2011/054418

(56) Entgegenhaltungen:
- WO-A1-92/16686
- WO-A1-94/12281
- DE-A1-102007 027 400
- KR-A- 20090 034 626
- US-A- 2 983 378
- US-A- 4 018 675
- US-A- 4 083 776

## Beschreibung

Die Erfindung betrifft das Gebiet der Aufbereitung von Altglas.

Altglas wird insbesondere in Deutschland in öffentlich aufgestellten Tonnen gesammelt. Dabei wird eine Vorselektion getroffen, indem Altglas einer bestimmten Farbe jeweils nur in eine bestimmte Tonne geworfen werden soll. Dies wird vom Publikum mehr oder minder stark beachtet. Eine scharfe Trennung nach Farben des Glases ist damit natürlich nicht erzielbar.

Altglas besteht insbesondere aus Flaschen, aber auch aus dosenförmigen Glasartikeln. In jedem Falle ist das Altglas mit starken Verunreinigungen behaftet. Hierzu gehören Reste von Gefäß-Inhalten, Metallteile wie Flaschenverschlüsse und Kunststoffteile. Besonders unangenehm sind Aufkleber wie Etiketten.

Alle diese Verunreinigungen müssen im Zuge der Aufbereitung (Recycling) von Altglas beseitigt werden. Hiermit befasst sich die Erfindung.

Der Prozess zum Aufbereiten von Altglas oder Glasbruch jeglicher Art enthält zahlreiche Verfahrensschritte. Hierzu gehört unter anderem das Zerkleinern des in die Tonnen geworfenen Glases zu Scherben beziehungsweise Partikeln. Diese können beispielsweise handtellergroß sein.

Ein weiterer entscheidender Verfahrensschritt ist das Trennen der Glaspartikel in die verschiedenen Farbfraktionen. Die Glaspartikel sowie deren Farbe werden im Fallen von optischen Sensoren erfasst, und das Messergebnis steuert nachgeschaltete Blasdüsen, die wiederum selektiv auf die einzelnen Farben reagieren und Fehlfarben aussortieren.

An den Glasscherben haftende Reste von Aufklebern wie Etiketten sind hierbei störend. Deswegen wird der genannten Trennung nach Farben ein entsprechender Verfahrensschritt zum Entfernen der Aufkleber vorgeschaltet. Um diesen Verfahrensschritt geht es bei der Erfindung.

Anlagen zum Entfernen der Reste von Aufklebern sind bekannt. Dabei wird eine Wanne mit Partikeln von Altglas angefüllt. Die Wanne enthält Rührer, die in der Masse der Partikel umlaufen. Der Umlauf führt zu einem gegenseitigen Reiben der einzelnen Partikel, wobei auch die Reste von Aufklebern mehr oder minder gut von den Partikeln gelöst werden, sodass sie in einem nachfolgenden Schritt entfernt werden können. Es ist bekannt, dass das Entfernen der Aufkleber besser funktioniert, wenn die Glasscherben möglichst feucht sind. Das bekannte Verfahren ist jedoch unter verschiedenen Aspekten unzulänglich. Die Rührer unterliegen einem hohen Verschleiß. Die Trennung der Reste der Aufkleber von den Glaspartikeln ist nur unvollständig.

KR 2009/034626 A beschreibt eine Vorrichtung, die dem Trennen von Etiketten aus PET-Flaschen und von abgelösten Etiketten dient. Es handelt sich somit hierbei nicht um Glasbruch, sondern um Bruchstücke aus Plastik. Auch geht es nicht darum, Etiketten von den Bruchstücken abzulösen. Die Etiketten sind bereits abgelöst. Es geht nur um das Trennen der bereits abgelösten Etiketten einerseits von PET-Bruchstücken andererseits. Dies wird mittels eines Windsichterverfahrens erreicht.

Weiterhin ist keine Rede davon, dass die Bruchstücke feucht sind. Auch ist die zum Windsichten verwendete Luft nicht heiß.

US 4 083 776 A beschreibt eine Trommel, der Glasbruch am einen Ende zugeführt, und vom anderen Ende wieder abgeführt wird. Dabei geht es darum, jene Stoffe, welche Altglas begleiten, aber mit diesem nicht fest verbunden sind, vom Glasbruch zu trennen. Es geht somit nicht um das Ablösen von Etiketten vom Glas.

WO 94/12281 A1 beschreibt eine Vorrichtung, die ebenfalls dem Trennen von Glasbruch einerseits und Abfall andererseits dient. Bei dem Abfall handelt es sich um gefährliche Gegenstände, die beispielsweise Quecksilber enthalten.

WO 92/16686 A1 beschreibt eine Anlage zum Aufbereiten von kunststoffbeschichteten Papierprodukten und zum Trennen dieser beiden Stoffe.

US 2 983 378 A beschreibt eine drehbare Trommel zum Waschen von Bruchstücken aus Abfall eines ersten Materiales, sowie zum Abtrennen von weiteren Partikeln aus einem zweiten Material.

DE 10 2007 027 400 A1 beschreibt eine Vorrichtung zum Aufbereiten von Glasbruch, an welchem Aufkleber aus Papier haften. Dabei wird ein Strom von Glasbruch durch ein Wasserbad hindurchgeführt, wobei die Aufkleber vom Glasbruch abgelöst werden sollen. Von einem Heißluftstrom ist hierbei keine Rede.

US 4 018 675 A beschreibt das Aufbereiten von Papier- oder Kartonabfall.

Der Erfindung liegt die Aufgabe zugrunde, ein vorteilhaftes Verfahren und eine Vorrichtung zum Entfernen der an Glaspartikeln haftenden Reste von Aufklebern anzugeben, welche in der Lage ist, in derselben Vorrichtung die Glasscherben zu trocknen und gegebenenfalls vorher zu waschen.

Diese Aufgabe wird durch die Merkmale der selbständigen Ansprüche gelöst.

Wesentliche oder vorteilhafte Gedanken der Erfindung sind die Folgenden:
- Es werden Partikel von Glasbruch auf eine Unterlage gebracht, und zwar in den Innenraum einer umlaufenden Trommel. Durch die umlaufende Bewegung der Trommel wird ein gegenseitiges Reiben der Glaspartikel erzeugt.
- Um ein gutes Umschichten und Reiben der Scherben zu erreichen, kann die umlaufende Trommel mit Einbauten ausgestattet sein.
- Die Glaspartikel sind mit Wasser benetzt oder werden erst in der Trommel mit Wasser benetzt.
- Beim Umlauf der Trommel kommt es zu einem gegenseitigen Reiben der Glaspartikel, und damit zu einem Ablösen der Aufkleber-Reste von den Glaspartikeln.
- Da die Trommel am Aufgabeende kontinuierlich mit Glaspartikeln beschickt wird, wandern die von Aufklebern befreiten Glaspartikel weiter in der Trommel zum gegenüberliegenden Trommelende.
- Am gegenüberliegenden Trommelende befindet sich eine Heißluftquelle. Die heiße Luft trocknet zum einen die Glaspartikel, zum anderen nimmt sie die Aufkleber-Reste mit und führt diese ab, und zwar an jenem Ende der Glastrommel, an welchem die Glaspartikel eingeführt wurden.
- Es ist eine Vorrichtung vorgesehen, um die Glaspartikel zu befeuchten, beispielsweise mit Wasser.
- Die Unterlage ist zum Abführen von Wasser wenigstens im Aufgabebereich perforiert.

Durch die Erfindung werden mit einfachen Mitteln die drei folgenden Teilprobleme gelöst:
- Die Aufkleber werden von den Glaspartikeln abgetrennt, und zwar ohne verschleißanfällige Einbauten wie Rührer.
- Die Glaspartikel werden in ein- und derselben Vorrichtung anschließend getrocknet.
- Gleichzeitig werden die abgetrennten Aufkleber-Reste von der Trockenluft mitgenommen und nach außen abgeführt.

Die Vorrichtung, auf die die Glaspartikel aufgegeben werden, kann unterschiedlich gestaltet sein. So kommt vor allem die genannte Trommel in Betracht. Weiterhin ist eine Wanne als Unterlage möglich. Die Wanne ist langgestreckt und hat an ihrer einen Stirnseite einen Einlass für Glaspartikel, und an ihrer anderen Stirnseite einen Auslass. Bei der Wahl einer Wanne als Unterlage ist natürlich eine Rotation um die Längsachse der Wanne nicht möglich. Hier muss eine andere Maßnahme getroffen werden, um die Altglaspartikel in eine Bewegung mit gegenseitiger Reibung zu versetzen. Hierzu kommt beispielsweise eine Rüttelbewegung der Wanne in Betracht. Auch kann die Wanne als Schwingförderer ausgebildet sein, womit nicht nur das gegenseitige Reiben der Glaspartikel bewirkt wird, sondern auch noch eine zusätzliche Förderbewegung.

Es ist zweckmäßig, die Wanderbewegung des Stromes der Glaspartikel am Anfang der Behandlungsstrecke, das heißt gleich nach der Aufgabe auf die Unterlage, zu verzögern, um den Ablöseprozess zu intensivieren. Dies lässt sich dadurch erreichen, dass man bei Verwendung einer drehbar gelagerten Trommel diese im Bereich ihres Aufgabeendes ausbeult, und damit einen Speicherraum mit größerem Durchmesser als die Trommel bildet.

Auch kann daran gedacht werden, die Trommel gegen die Horizontale zu neigen, sodass die Glaspartikel bei ihrer Wanderung von der Aufgabestelle zur Abgabestelle einen ansteigenden Weg zurücklegen.

Der Stand der Technik sowie die Erfindung sind anhand der Zeichnung näher erläutert. Darin ist im Einzelnen Folgendes dargestellt:
- Figur 1: zeigt eine Aufbereitungswanne zum Ablösen von Aufkleber-Resten.
- Figur 2: zeigt in einer schematischen Aufrissansicht eine erfindungsgemäße Aufbereitungstrommel gemäß einer ersten Ausführungsform.
- Figur 3: zeigt in schematischer Ansicht eine zweite Ausführungsform einer Trommel.
- Figur 4: zeigt eine oben offene Schale

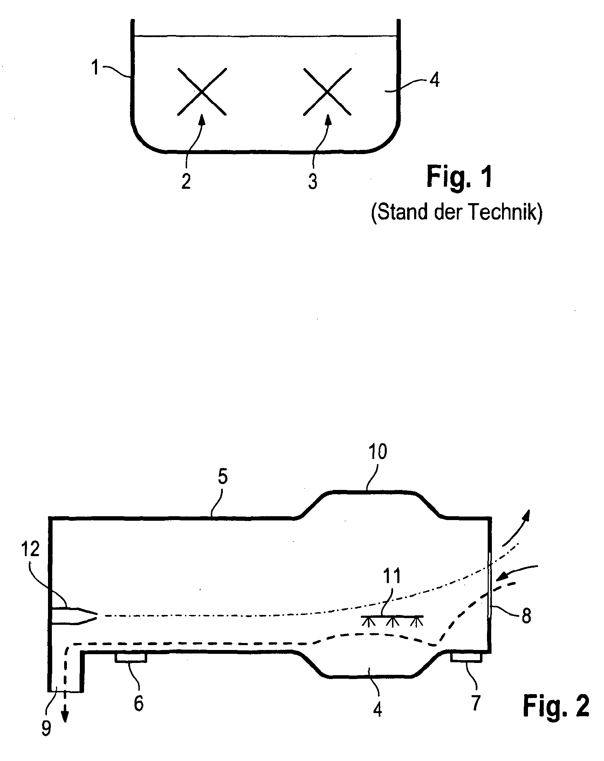

Die Vorrichtung gemäß Figur 1 gemäß dem Stande der Technik arbeitet chargenweise. Die Vorrichtung umfasst einen Behälter .1 sowie darin arigeordnete Rührer 2 und 3. In den Behälter wird ein bestimmtes Quantum von Glasbruch 4 eingefüllt. Der Glasbruch ist vom vorausgegangenen Waschprozess her mit Wasser benetzt.

Die Rührer 2, 3 laufen eine gewisse Zeitspanne um, bis der erhoffte Effekt des Ablösen von Resten von Aufklebern von den Glaspartikeln erreicht ist. Sodann wird der Behälter geleert. Der Glasbruch wird weiter behandelt.

Die bekannte Vorrichtung arbeitet nur unzulänglich, weil die Entfernung der Reste der Aufkleber unvollständig ist. Die Rührer 2, 3 unterliegen einem hohen Verschleiß.

Die erfindungsgemäße Vorrichtung umfasst als wesentliches Bauteil eine langgestreckte Trommel. Diese ist drehbar gelagert - siehe die Rollen 6 und 7. Die nicht gezeigte Drehachse der Trommel 5 verläuft horizontal. Sie könnte auch gegen die Horizontale geneigt sein.

Die Trommel weist im Bereich der Aufgabestelle 8 eine Ausbuchtung 10 auf. Siehe Figur 2. Die Ausbuchtung 10 bildet einen Speicherraum zur Aufnahme einer größeren Menge von Glasbruch 4. Der Glasbruch ist von einem vorausgegangenen Waschprozess her noch mit Wasser benetzt. Er könnte auch noch weiterhin benetzt werden durch Aufgabe von Wasser aus Sprühdüsen 11.

Beim Umlauf der Trommel 5 kommt es zu einer Bewegung der zahlreichen Glasbruchpartikel relativ zueinander, und damit zu einem gegenseitigen Reiben. Das Reiben führt zu einem Lösen von Resten von Aufklebern von den einzelnen Partikeln. Dieser Löseprozess findet innerhalb der Ausbuchtung 10 statt. Die Partikel am Ende der Speicherzone sind somit weitgehend oder völlig frei von Aufkleber-Resten.

Aufgrund der kontinuierlichen Zufuhr von Glasbruch an der Aufgabestelle 8 kommt es zu einem Überlauf des im Speicherraum enthaltenen Glasbruchquantums. Es wird ein Strom aus Glaspartikeln gebildet, der sich in Richtung auf die Abgabestelle 9 hin bewegt. Dieser Strom ist somit frei von Aufkleber-Resten.

An derjenigen Stirnseite der Trommel 5, an welcher sich die Abgabestelle 9 befindet, ist eine Heißluftquelle 12 vorgesehen. Aus dieser tritt ein heißer Luftstrom aus - strichpunktiert dargestellt. Der Luftstrom streicht über beziehungsweise durch den genannten Glasstrom, und zwar in einer dem Glasström entgegengesetzten Richtung. Der Heißluftstrom kühlt sich auf seinem Wege ab, und trocknet dabei die Partikel des Glaspartikelstromes. Die im Speicherraum aus dem dort vorhandenen Glasbruchquantum 4 abgetrennten Aufkleber-Reste werden vom Heißluftstrom teilweise oder vollständig mitgenommen und aus der Trommel 5 herausgeführt, und zwar an der in der Figur rechts dargestellten Stirnseite der Trommel 5.

Die Trommel löst somit die folgenden Einzelaufgaben:
- Sie trennt Aufkleber-Reste von Glaspartikeln im Speicherraum ab.
- Sie trocknet den gereinigten Glasbruchstrom.
- Sie führt die abgetrennten Aufkleber-Reste mit sich und befördert diese aus der Trommel 5 hinaus.

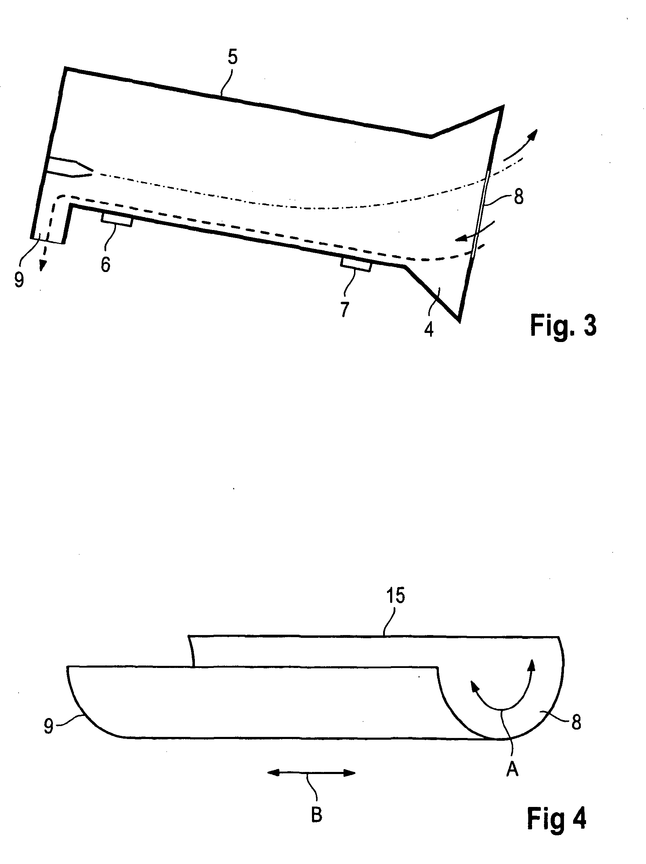

Bei der Ausführungsform gemäß Figur 3 ist die Trommel 5 gegen die Horizontale geneigt, und zwar derart, dass sich der Glasbruchstrom zur Abgabestelle 9 hin aufwärts bewegt. Die Trommel 5 ist wiederum drehbar gelagert. Die Trommel 5 ist im Bereich der Aufgabestelle konisch ausgebildet. Hierdurch entsteht wiederum ein Speicherraum, der ein größeres Quantum von Glasbruch 4 aufnimmt. Im Übrigen verläuft der Prozess genau wie bei der Ausführungsform gemäß Figur 2. Im Speicherraum werden die Aufkleber-Reste von den Glaspartikeln abgetrennt, und es wandert ein gereinigter Glasbruchpartikelstrom zur Abgabestelle 9, wo er aus der Trommel 5 austritt.

Figur 4 veranschaulicht eine Schale 15. Diese ist funktionsgleich mit den Trommeln 5 gemäß der Figuren 2 und 3. Die Schale 15 weist ebenfalls eine Aufgabestelle 8 und eine Abgabestelle 9 auf. Sie kann mit einer Speicherzone versehen werden, jedoch ist dies nicht zwingend erforderlich. Dies gilt auch für die beiden Trommeln 2 und 3. Bei entsprechender Länge der Behandlungsstrecke zwischen Aufgabestelle und Abgabestelle kann eine Relativbewegung zwischen den zahlreichen Glasbruchpartikeln auftreten, und damit ein Abreiben von Aufkleber-Resten.

Die Schale 15 muss auch in irgendeiner Weise derart bewegt werden, dass der hierbei nicht dargestellte Glasbruch bewegt wird, sodass ein gegenseitiges Reiben der Glasbruchpartikel erfolgt.

Die Bewegung der Schale 15 kann beispielsweise im Sinne des Doppelpfeiles A oder im Sinne des Doppelpfeiles B verlaufen. Sie sollte nach Möglichkeit rüttelnd verlaufen, um den Durchwirbeleffekt der Glaspartikel zu erzielten. Die Bewegung kann intermittierend verlaufen.

Die Unterlage - gleich ob Trommel oder Schale - kann perforiert sein, wenigstens im Aufgabebereich 18, sodass an den Glasbruchpartikeln haftendes oder auf diese aufgegebenes Wasser nach unten ablaufen kann.

**Bezugszeichenliste**

| | |
|---|---|
| 1 | Behälter |
| 2 | Rührer |
| 3 | Rührer |
| 4 | Glasbruch |
| 5 | Trommel |
| 6 | Rolle |
| 7 | Rolle |
| 8 | Aufgabestelle |
| 9 | Abgabestelle |
| 10 | Ausbuchtung |
| 11 | Wasserdüsen |
| 12 | Heißluftdüse |

## Patentansprüche

1. Verfahren zum Aufbereiten von feuchtigkeitsbehaftetem Glasbruch, an dem Reste von Aufklebern haften, mit den folgenden Verfahrensschritten:
1.1 der Glasbruch (4) wird an einer Aufgabestelle (8) kontinuierlich auf das eine Ende einer Trommel (5, 15) aufgebracht;
1.2 der Glasbruch (4) wandert als Strom von Glasbruchpartikeln in der Trommel (5, 15) zu einer Abgabestelle (9), wo er entnommen wird;
1.3 die Trommel (5, 15) führt Bewegungen aus, die zu einem Umwälzen und gegenseitigen Reiben der Glasbruchpartikel (4) führen; **dadurch gekennzeichnet**,
1.4 dass ein Gasstrom auf den Strom von Glasbruchpartikeln aufgebracht und zum Abführen abgelöster Aufkleber über diesen hinweggeführt wird;
1.5 als Gas wird zum Trocknen des Glasbruches und zum Abführen der Feuchtigkeit heiße Luft verwendet.

2. Verfahren nach Anspruch 1, **dadurch gekennzeichnet, dass** der Strom der Glaspartikel und der Gasstrom gleichgerichtet oder einander entgegengerichtet sind.

3. Verfahren nach Anspruch 1 oder 2, **dadurch gekennzeichnet, dass** die Wanderbewegung des Glasbruchstromes unmittelbar nach der Aufgabestelle verzögert wird.

4. Verfahren nach einem der Ansprüche 1 bis 3, **dadurch gekennzeichnet, dass** der Glasbruch (4) beim Aufgeben flüssiges Medium mit sich führt, oder dass solches an der Aufgabestelle oder unmittelbar nach dieser zugeführt wird.

5. Vorrichtung zum Aufbereiten von feuchtigkeitsbehaftetem Glasbruch, an dem Reste von Aufklebern haften, umfassend die folgenden Merkmale:
5.1 eine Trommel (5, 15) zum Aufnehmen des Glasbruches (4);
5.2 die Trommel (5, 15) weist eine Aufgabestelle (8) auf, an der Glasbruch (4) kontinuierlich aufgegeben wird, sowie eine Abgabestelle (9), zu der Glasbruch als Strom von Glasbruchpartikeln gelangt, und von der er abgegeben wird;
5.3 einen Antrieb, um die Trommel (5, 15) in eine Bewegung zu versetzen, die zu einer Relativbewegung der Glasbruchpartikel und damit zu einem gegenseitigen Reiben führt; **dadurch gekennzeichnet, dass**
5.4 eine Gasquelle (12) vorgesehen ist, mit der ein Gasstrom auf den Strom der Glasbruchpartikel zum Abführen abgelöster Aufkleber aufgebracht und über diesen hinweggeführt wird;
5.5 die Gasquelle fördert zum Trocknen des Glasbruches und zum Abführen der Feuchtigkeit heiße Luft.

6. Vorrichtung nach Anspruch 5, **dadurch gekennzeichnet, dass** im Bereich der Aufgabestelle (8) Mittel zum Verzögern des Stromes der Glasbruchpartikel vorgesehen sind.

7. Vorrichtung nach Anspruch 5 der 6, **dadurch gekennzeichnet, dass** eine Einrichtung zum Zuführen eines fließfähigen Mediums wie Wasser zum Glasbruch (4) vor oder an der Aufgabestelle (8) vorgesehen ist.

8. Vorrichtung nach Anspruch 5 bis 7, **dadurch gekennzeichnet, dass** die Vorrichtung im Bereich der Aufgabestelle so ausgeführt ist, dass überschüssiges Waschwasser zusammen mit dem abgetrennten Schmutz abgeführt werden kann.

9. Vorrichtung nach einem der Ansprüche 5 bis 8 **dadurch gekennzeichnet, dass** die Trommel (5, 15) wenigstens im Bereich der Aufgabestelle (8) perforiert ist.

## Claims

1. A method for processing broken glass subject to moisture, to which residues of stickers adhere, having the following method steps:
1.1 the broken glass (4) is delivered continuously onto one end of a drum (5, 15) at a delivery point (8);
1.2 the broken glass (4) travels as a stream of broken glass particles in the drum (5, 15) to a discharge point (9), where it is removed;
1.3 the drum (5, 15) executes movements which result in circulation and mutual friction of the broken glass particles (4);
1.4 a gas stream is applied to the stream of broken glass particles and guided over it to remove detached stickers;
1.5 hot air is used as the gas for drying the broken glass and for removing the moisture.

2. The method according to Claim 1, **characterized in that** the stream of glass particles and the gas stream are oriented in the same direction or in opposite directions to one another.

3. The method according to Claim 1 or 2, **characterized in that** the traveling movement of the broken glass stream is decelerated immediately after the delivery point.

4. The method according to one of Claims 1 to 3, **characterized in that** the broken glass (4) conducts liquid medium with it upon placement, or such a medium is supplied at the delivery point or immediately thereafter.

5. A device for processing broken glass subject to moisture, to which the residues of stickers adhere, comprising the following features:
5.1 a drum (5, 15) for accommodating the broken glass (4);
5.2 the drum (5, 15) has a delivery point (8), on which broken glass (4) is continuously delivered, and a discharge point (9), which broken glass reaches as a stream of broken glass particles, and from which it is discharged;
5.3 a drive, in order to set the drum (5, 15) into a movement, which results in a relative movement of the broken glass particles and therefore mutual friction
5.4 a gas source (12) is provided, using which a gas stream is applied to the stream of the broken glass particles and guided over it to remove detached stickers;
5.5 the gas source conveys hot air for drying the broken glass and for removing the moisture.

6. The device according to one of Claim 5, **characterized in that** means for decelerating the stream of the broken glass particles are provided in the area of the delivery point (8).

7. The device according to one of Claim 5 or 6, **characterized in that** an apparatus is provided for supplying a free-flowing medium such as water to the broken glass (4) before or at the delivery point (8).

8. The device according to one of Claims 5 to 7, **characterized in that** the device is implemented in the area of the delivery point so that excess water can be drained together with the separated contaminant.

9. The device according to one of Claims 5 to 8, **characterized in that** the underlay (5, 15) is perforated at least in the area of the delivery point (8).

## Revendications

1. Procédé de préparation de calcin de verre provoqué par l'humidité, sur lequel des résidus d'autocollants restent collés, présentant les phases suivantes:
1.1 le calcin de verre (4) est acheminé de façon continue vers l'extrémité d'un tambour (5, 15) au niveau d'une zone d'alimentation;
1.2 le calcin de verre (4) se déplace en flux de particules de calcin de verre dans le tambour (5, 15) vers une zone d'évacuation (9), pour y être retiré;
1.3 le tambour (5, 15) effectue des mouvements, provoquant la circulation et le frottement réciproque de particules de calcin de verre (4); caractérisé en ce
1.4 que l'on applique un flux de gaz sur le flux de particules de calcin de verre et que l'on fait passer au-dessus de celui-ci pour évacuer les autocollants détachés;
1.5 on utilise de l'air chaud comme gaz pour sécher le calcin de verre et pour évacuer l'humidité.

2. Procédé selon la revendication 1, **caractérisé en ce que** le flux de particules de verre et le flux de gaz vont dans le même sens ou bien vont en sens opposé.

3. Procédé selon la revendication 1 ou 2 **caractérisé en ce que** le mouve-ment d'excursion du flux de calcin de verre est temporisé juste après la zone d'alimentation.

4. Procédé selon l'une des revendications 1 à 3, **caractérisé en ce que** le calcin de verre (4) entraîne avec lui un milieu liquide lors de l'alimentation , où bien que celui-ci est acheminé au niveau de la zone d'alimentation ou juste après.

5. Procédé de préparation de calcin de verre provoqué par l'humidité, sur lequel des résidus d'autocollants restent collés, comprenant les caractéristiques suivantes:
5.1 un tambour (5, 15) pour la prise en charge du calcin de verre (4);
5.2 le tambour (5, 15) présente une zone d'alimentation (8), au niveau de laquelle le calcin de verre (4) est déposé de façon continue, de même qu'une zone d'évacuation (9) à laquelle parvient le calcin de verre sous forme de flux de particules de calcin de verre et d'où il est évacué;
5.3 un entraînement, pour impulser un mouvement du tambour (5, 15) provoquant un mouvement relatif des particules de calcin de verre et donc leur frottement réciproque; caractérisé en ce
5.4 qu'une source de gaz (12) est prévue, avec laquelle on applique un flux de gaz au flux de particules de calcin de verre pour évacuer les autocollants détachés et que l'on fait passer au-dessus de celui-ci;
5.5 la source de gaz achemine de l'air chaud pour sécher le calcin de verre et pour évacuer l'humidité.

6. Dispositif selon la revendication 5, **caractérisé en ce que** des moyens de temporisation du flux des particules de calcin de verre sont prévus au niveau de la zone d'alimentation (8).

7. Dispositif selon la revendication 5 ou 6, **caractérisé en ce qu'**un système est prévu pour acheminer un agent fluide comme de l'eau au calcin de verre (4) en amont ou au niveau de la zone d'alimentation (8).

8. Dispositif selon les revendications 5 à 7, **caractérisé en ce que** le dispositif est conçu au niveau de la zone d'alimentation de telle sorte que l'eau de lavage en excès peut être évacuée en même temps que la saleté enlevée.

9. Dispositif selon l'une des revendications 5 à 8, **caractérisé en ce que** le tambour (5, 15) est perforé au moins au niveau de la zone d'alimentation.
